# EUROPEAN PATENT APPLICATION

(11) **EP 4 311 069 A1**
(43) Date of publication of application: **24.01.2024**
(21) Application number: 22770532.4
(22) Date of filing: 15.03.2022
(51) Int. Cl.: H02J 7/00

(54) **ENERGY STORAGE SYSTEM, MAIN ENERGY STORAGE DEVICE AND AUXILIARY ENERGY STORAGE DEVICE**

(30) Priority: 16.03.2021 CN 202120545786 U
(71) Applicant: Shenzhen Carku Technology Co., Limited, Shenzhen, Guangdong 518000 (CN)
(72) Inventor: LEI, Yun, Shenzhen, Guangdong 518000 (CN); ZHANG, Zhifeng, Shenzhen, Guangdong 518000 (CN); OUYANG, Mingxing, Shenzhen, Guangdong 518000 (CN)
(74) Representative: Hamer, Christopher K.
(86) International application number: PCT/CN2022/081041
(87) International publication number: WO 2022/194179

(57) **Abstract**

An energy storage system, a primary energy-storage-apparatus, and an auxiliary energy-storage-apparatus are provided in embodiments of the disclosure. The energy storage system includes a primary energy-storage-apparatus and a first auxiliary energy-storage-apparatus. The primary energy-storage-apparatus includes a main control module, a first battery group, at least one power-supply-interface, and a first auxiliary machine-interface. The at least one power-supply-interface is connectable to an electronic device. The main control module is configured to control the first battery group or the first auxiliary energy-storage-apparatus to power the electronic device. In the embodiments of the disclosure, costs of energy storage products can be reduced.

## Description

### CROSS-REFERENCE TO RELATED APPLICATION(S)

This application claims priority to Chinese Patent Application No. 202120545786.0, filed March, 16, 2021, and entitled "ENERGY STORAGE SYSTEM AND PRIMARY ENERGY-STORAGE-APPARATUS", the entire disclosure of which is incorporated herein by reference.

### TECHNICAL FIELD

The disclosure relates to the field of electronic circuit technologies, and in particular, to an energy storage system, a primary energy-storage-apparatus, and an auxiliary energy-storage-apparatus.

### BACKGROUND

With the maturity of battery technologies, various battery energy-storage products emerge continuously. Due to the convenience they bring to people's daily lives, the battery energy storage products have gained widespread popularity and gradually become indispensable daily necessities for people.

At present, various commonly used energy storage products on the market may differ in capacity but have similar functions. Due to different usage requirements of different user groups, developing a separate product for each user group would increase development costs and costs of individual products.

### SUMMARY

In embodiments of the disclosure, an energy storage system, a primary energy-storage-apparatus, and an auxiliary energy-storage-apparatus are provided to reduce development costs of energy storage products.

In a first aspect of the embodiments of the disclosure, an energy storage system is provided. The energy storage system includes a primary energy-storage-apparatus and a first auxiliary energy-storage-apparatus. The primary energy-storage-apparatus includes a main control module, a first energy-storage-group, at least one power-supply-interface, and a first auxiliary machine-interface. The at least one power-supply-interface is connectable to an electronic device. The main control module is configured to control the first energy-storage-group or the first auxiliary energy-storage-apparatus to power the electronic device.

Optionally, the first auxiliary machine-interface is connectable to the first auxiliary energy-storage-apparatus.

Optionally, the first energy-storage-group includes at least one of a first battery group or a first capacitor group.

Optionally, the main control module is configured to control the first energy-storage-group or the first auxiliary energy-storage-apparatus to power the electronic device when the first auxiliary machine-interface is connected to the first auxiliary energy-storage-apparatus.

Optionally, the primary energy-storage-apparatus further includes a charging input interface connectable to a power supply. The first auxiliary energy-storage-apparatus includes a second energy-storage-group. The main control module is further configured to charge the first energy-storage-group or the second energy-storage-group via the power supply when the charging input interface is connected to the power supply.

Optionally, the main control module configured to charge the first energy-storage-group or the second energy-storage-group via the power supply is configured to: charge the first energy-storage-group when a remaining energy of the first energy-storage-group is less than a predetermined value; and charge the second energy-storage-group when the remaining energy of the first energy-storage-group is greater than or equal to the predetermined value and a remaining energy of the second energy-storage-group is less than the predetermined value.

Optionally, the main control module configured to charge the first energy-storage-group or the second energy-storage-group via the power supply is configured to: charge the second energy-storage-group when the remaining energy of the first energy-storage-group is greater than or equal to the predetermined value and a remaining energy of the second energy-storage-group is greater than or equal to a predetermined value.

In the embodiments of the disclosure, a principle of prioritizing charging of the first energy-storage-group is adopted. Charging of the first energy-storage-group takes priority over that of the second energy-storage-group of the first auxiliary energy-storage-apparatus. When the first energy-storage-group is first fully charged, the second energy-storage-group of the first auxiliary energy-storage-apparatus is then charged. Priority is given to charging of an energy-storage-group of the primary energy-storage-apparatus, so that in a case where a long endurance is not required and there is no extra time available to charge an energy-storage-group of the auxiliary energy-storage-apparatus, carrying only the primary energy-storage-apparatus is sufficient to satisfy the endurance requirement, thereby enhancing portability.

Optionally, the main control module configured to charge the first energy-storage-group or the second energy-storage-group via the power supply is configured to: charge the second energy-storage-group when the remaining energy of the second energy-storage-group is less than a predetermined value; and charge the first energy-storage-group when the remaining energy of the second energy-storage-group is greater than or equal to the predetermined value and the remaining energy of the first energy-storage-group is less than the predetermined value.

Optionally, the main control module configured to charge the first energy-storage-group or the second energy-storage-group via the power supply is configured to: charge the first energy-storage-group when the remaining energy of the first energy-storage-group is greater than or equal to a predetermined value and the remaining energy of the second energy-storage-group is greater than or equal to the predetermined value.

In the embodiments of the disclosure, a principle of prioritizing charging of the second energy-storage-group is adopted. Charging of the second energy-storage-group of the first auxiliary energy-storage-apparatus takes priority over that of the first energy-storage-group of the primary energy-storage-apparatus. When the second energy-storage-group is fully charged or substantially fully charged, the first energy-storage-group of the primary energy-storage-apparatus is then charged. Priority is given to charging of an energy-storage-group of an auxiliary energy-storage-apparatus, so that the auxiliary energy-storage-apparatus can be prioritized to reach a full charging. This allows the auxiliary energy-storage-apparatus to be connected to other primary energy-storage-apparatuses, thereby improving the utilization of the auxiliary energy-storage-apparatus.

Optionally, the first auxiliary energy-storage-apparatus includes a second energy-storage-group. The main control module configured to power the electronic device via the first energy-storage-group or the first auxiliary energy-storage-apparatus is configured to: power the electronic device via the second energy-storage-group when the remaining energy of the second energy-storage-group is greater than a first threshold value; and power the electronic device via the first energy-storage-group when the remaining energy of the second energy-storage-group is less than the first threshold value and the remaining energy of the first energy-storage-group is greater than a second threshold value.

In the embodiments of the disclosure, a principle of prioritizing discharging of the second energy-storage-group of the first auxiliary energy-storage-apparatus is adopted. The second energy-storage-group takes priority to power the electronic device, thereby ensuring a sufficient remaining energy of the primary energy-storage-apparatus. Priority is given to discharging of an auxiliary energy-storage-apparatus, so that in a case where a long endurance is not required and there is no extra time available to charge the auxiliary energy-storage-apparatus, a sufficient remaining energy of the primary energy-storage-apparatus can be ensured. This allows the fulfillment of the endurance requirement even when carrying only the primary energy-storage-apparatus, thereby enhancing portability.

Optionally, the first auxiliary energy-storage-apparatus includes the second energy-storage-group. The main control module configured to power the electronic device via the first energy-storage-group or the first auxiliary energy-storage-apparatus is configured to: power the electronic device via an energy-storage-group having a higher remaining energy in the first energy-storage-group and the second energy-storage-group when the remaining energy of the second energy-storage-group is less than a first threshold value and the remaining energy of the first energy-storage-group is less than a second threshold value.

In the embodiments of the disclosure, when the remaining energy of the first energy-storage-group and the remaining energy of the second energy-storage-group are both extremely low, an energy-storage-group having a higher energy power has the priority to discharge, thereby preventing over-discharging of an energy-storage-group, and prolonging the service life of the energy-storage-group.

Alternatively, the first auxiliary energy-storage-apparatus includes the second energy-storage-group. The main control module configured to power the electronic device via the first energy-storage-group or the first auxiliary energy-storage-apparatus is configured to: power the electronic device via the first energy-storage-group when the remaining energy of the first energy-storage-group is greater than a first threshold value; and power the electronic device via the second energy-storage-group when the remaining energy of the first energy-storage-group is less than a first threshold value and the remaining energy of the second energy-storage-group is greater than a second threshold value.

In the embodiments of the disclosure, a principle of prioritizing discharging of the first energy-storage-group is adopted. Discharging of the first energy-storage-group takes priority over that of the auxiliary energy-storage-apparatus, so that a sufficient remaining energy of the auxiliary energy-storage-apparatus can be ensured. This allows the auxiliary energy-storage-apparatus to be connected to other primary energy-storage-apparatuses, thereby improving the utilization of the auxiliary energy-storage-apparatus.

Optionally, the energy storage system further includes a second auxiliary energy-storage-apparatus. The main control module is configured to control the first energy-storage-group to power the electronic device when a remaining energy of the first auxiliary energy-storage-apparatus and a remaining energy of the second auxiliary energy-storage-apparatus are both less than a first threshold value and a remaining energy of the first energy-storage-group is greater than a second threshold value.

Optionally, the main control module is configured to control an energy storage having a higher remaining energy in the first auxiliary energy-storage-apparatus, the second auxiliary energy-storage-apparatus, and the first energy-storage-group to power the electronic device, when the remaining energy of the first auxiliary energy-storage-apparatus and the remaining energy of the second auxiliary energy-storage-apparatus are both less than the first threshold value and the remaining energy of the first energy-storage-group is greater than the second threshold value.

In the embodiments of the disclosure, when the remaining energy of at least two auxiliary energy-storage-apparatuses and the remaining energy of the main energy-storage-apparatus are both extremely low, an energy-storage-apparatus having a higher energy power has a priority to discharge, thereby preventing over-discharging of an energy-storage-apparatus, and prolonging the service life of the energy-storage-apparatus.

Optionally, the primary energy-storage-apparatus further includes a first communication module, and the first auxiliary energy-storage-apparatus further includes a second communication module. The main control module is configured to communicate with the second communication module through the first communication module when the first auxiliary machine-interface is connected to the first auxiliary energy-storage-apparatus.

Optionally, the main control module includes a main control board and a battery management system. The main control board is connected to the first energy-storage-group through the battery management system.

Optionally, the at least one power-supply-interface includes at least one of: at least one direct-current (DC) power-supply-interface or at least one alternating-current (AC) power-supply-interface.

Optionally, the primary energy-storage-apparatus further includes an inverter and an AC power-supply-interface. The main control board is connected to the AC power-supply-interface through the inverter.

Optionally, a main control board of the main control module is connected to the at least one DC power-supply-interface.

In a second aspect of the disclosure, a primary energy-storage-apparatus is provided. The primary energy-storage-apparatus includes a main control module, a first energy-storage-group, at least one power-supply-interface, and at least one auxiliary machine-interface. The at least one auxiliary machine-interface is connectable to at least one auxiliary energy-storage-apparatus, and each of the at least one power-supply-interface is connectable to an electronic device. The main control module is configured to control the first energy-storage-group or the first auxiliary energy-storage-apparatus to power the electronic device when a first auxiliary machine-interface is connected to the first auxiliary energy-storage-apparatus. The first auxiliary machine-interface is any one of the at least one auxiliary machine-interface, and the first auxiliary energy-storage-apparatus is any one of the at least one auxiliary energy-storage-apparatus.

In a third aspect of the disclosure, a primary energy-storage-apparatus is provided. The primary energy-storage-apparatus includes a main control module, a first energy-storage-group, a power-supply-interface, and an auxiliary machine-interface. The auxiliary machine-interface is connectable to an auxiliary energy-storage-apparatus. The power-supply-interface is connectable to an electronic device. The main control module is configured to control the first energy-storage-group or the auxiliary energy-storage-apparatus to power the electronic device when the auxiliary machine-interface is connected to the auxiliary energy-storage-apparatus.

Optionally, the first energy-storage-group comprises at least one of a first battery group or a first capacitor group.

Optionally, the primary energy storage apparatus further includes a charging input interface connectable to a power supply. The main control module is further configured to charge the first energy-storage-group or the auxiliary energy-storage-apparatus via the power supply when the charging input interface is connected to the power supply.

Optionally, the main control module configured to charge the first energy-storage-group or the auxiliary energy-storage-apparatus via the power supply is configured to: charge the first energy-storage-group when a remaining energy of the first energy-storage-group is less than a predetermined value; and charge the auxiliary energy-storage-apparatus when the remaining energy of the first energy-storage-group is greater than or equal to the predetermined value and a remaining energy of the auxiliary energy-storage-apparatus is less than the predetermined value.

Optionally, the main control module configured to control the first energy-storage-group or the auxiliary energy-storage-apparatus to power the electronic device is configured to: control an energy-storage-group of the auxiliary energy-storage-apparatus to power the electronic device when a remaining energy of the auxiliary energy-storage-apparatus is greater than a first threshold value; and control the first energy-storage-group to power the electronic device when the remaining energy of the auxiliary energy-storage-apparatus is less than the first threshold value and a remaining energy of the first energy-storage-group is greater than a second threshold value.

Optionally, the main control module configured to control the first energy-storage-group or the auxiliary energy-storage-apparatus to power the electronic device is configured to: control the first energy-storage-group to power the electronic device when the auxiliary machine-interface is connected to a plurality of auxiliary energy-storage-apparatuses, and a remaining energy of each of the plurality of auxiliary energy-storage-apparatuses is less than a first threshold value and a remaining energy of the first energy-storage-group is greater than a second threshold value.

Optionally, the primary energy-storage-apparatus further includes a first communication module, and the auxiliary energy-storage-apparatus further includes a second communication module. The main control module is configured to communicate with the second communication module through the first communication module when the auxiliary machine-interface is connected to the auxiliary energy-storage-apparatus.

Optionally, the main control module includes a main control board and a battery management system. The main control board is connected to the first energy-storage-group through the battery management system.

Optionally, the power-supply-interface includes at least one of a DC power-supply-interface or an AC power-supply-interface.

Optionally, the primary energy-storage-apparatus further includes an inverter and an AC power-supply-interface. A main control board of the main control module is connected to the AC power-supply-interface through the inverter.

Optionally, a main control board of the main control module is connected to the DC power-supply-interface.

Optionally, the primary energy-storage-apparatus is a portable energy-storage-apparatus.

In a fourth aspect of the embodiments of the disclosure, an auxiliary energy-storage-apparatus is provided. The auxiliary energy-storage-apparatus includes a second energy-storage-group and a main machine-interface. The second energy-storage-group is connected to the main machine-interface. The main machine-interface is connectable to a primary energy-storage-apparatus to power an electronic device via the primary energy-storage -apparatus.

Optionally, the main machine-interface is further configured to receive electric energy from a power supply connected to the primary energy-storage-apparatus to charge the second energy-storage-group.

Optionally, the primary energy-storage-apparatus is the primary energy-storage-apparatus provided in the third aspect.

Optionally, the second energy-storage-group includes at least one of a second battery group or a second capacitor group.

Optionally, the auxiliary energy-storage-apparatus is a portable energy-storage-apparatus.

In the embodiments of the disclosure, the energy storage system is provided. The energy storage system includes the primary energy-storage-apparatus and the first auxiliary energy-storage-apparatus. The primary energy-storage-apparatus includes the main control module, the first energy-storage-group, the at least one power-supply-interface, and the first auxiliary machine-interface. The at least one power-supply-interface is connectable to the electronic device. The main control module is configured to control the first energy-storage-group or the first auxiliary energy-storage-apparatus to power the electronic device. The first auxiliary energy-storage-apparatus is any one of the at least one auxiliary energy-storage-apparatus included in the energy storage system. In the embodiments of the disclosure, the primary energy-storage-apparatus is connectable to the first auxiliary energy-storage-apparatus, so that a total battery capacity of the energy storage system can be flexibly adjusted on the basis of the first energy-storage-group. This enables the energy storage system to meet the endurance requirements in different scenarios without the need to develop energy storage products having different battery capacities, thereby reducing the development costs of energy storage products.

### BRIEF DESCRIPTION OF THE DRAWINGS

To describe technical solutions in embodiments of the disclosure or in the related art more clearly, the following briefly introduces the accompanying drawings required for describing the embodiments or the related art. Apparently, the accompanying drawings in the following description only illustrate some embodiments of the disclosure. Those of ordinary skill in the art may also obtain other drawings based on these accompanying drawings without creative efforts.
FIG. 1 is a schematic structural diagram of an energy storage system according to an embodiment of the disclosure.
FIG. 2 is a schematic structural diagram of another energy storage system according to an embodiment of the disclosure;
FIG. 3 is a schematic structural diagram of another energy storage system according to an embodiment of the disclosure.
FIG. 4 is a schematic structural diagram of another energy storage system according to an embodiment of the disclosure.
FIG. 5 is a schematic structural diagram illustrating a primary energy-storage-apparatus according to an embodiment of the disclosure.
FIG. 6 is a schematic structural diagram illustrating another primary energy-storage-apparatus according to an embodiment of the disclosure.
FIG 7 is a schematic structural diagram illustrating an auxiliary energy-storage-apparatus according to an embodiment of the disclosure.

### DETAILED DESCRIPTION

The technical solutions in the embodiments of the disclosure are clearly and completely described in the following with reference to the accompanying drawings in the embodiments of the disclosure. Apparently, the described embodiments are merely a part of rather than all the embodiments of the disclosure. All other embodiments obtained by those of ordinary skill in the art based on the embodiments of the disclosure without creative efforts are within the scope of the disclosure.

The terms such as "first" and "second" used in the specification, the claims, and the accompany drawings of the disclosure are used for distinguishing between different objects rather than describing a particular order. The terms "include", "comprise", and "have" as well as variations thereof are intended to cover non-exclusive inclusion. For example, a process, system, product, or apparatus including a series of steps or units is not limited to the listed steps or units, it can optionally include other operations or units that are not listed; alternatively, other operations or units inherent to the process, product, or device can be included either.

The term "implementation" referred to herein means that a particular feature, structure, or feature described in connection with the implementation may be contained in at least one implementation of the disclosure. The phrase appearing in various places in the specification does not necessarily refer to the same implementation, nor does it refer an independent or alternative implementation that is mutually exclusive with other implementations. It is expressly and implicitly understood by those skilled in the art that an implementation described herein may be combined with other implementations.

In the embodiments of the disclosure, an energy storage system, a primary energy-storage-apparatus, and an auxiliary energy-storage-apparatus are provided. The primary energy-storage-apparatus is connectable to at least one auxiliary energy-storage-apparatus, so that a total battery capacity of the energy storage system can be flexibly adjusted on the basis of the first energy-storage-group. This enables the energy storage system to meet the endurance requirements in different scenarios without the need to develop energy storage products having different battery capacities, thereby reducing the development costs of energy storage products. Detailed descriptions are provided below.

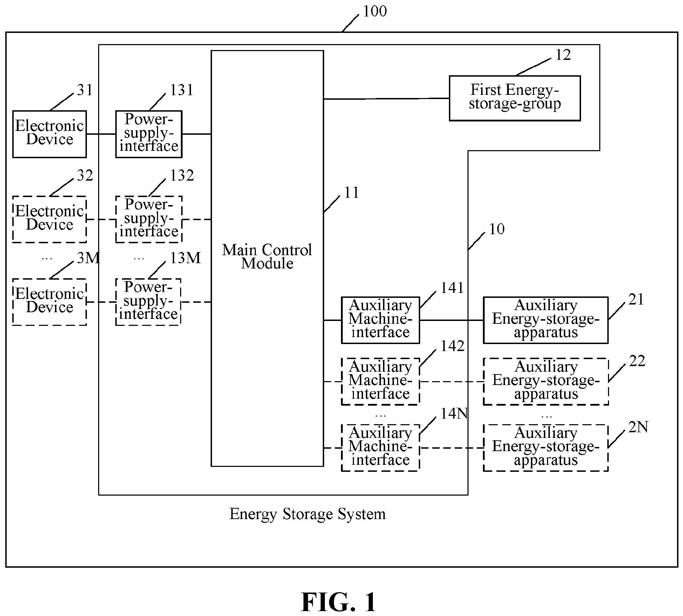

FIG. 1 is a schematic structural diagram of an energy storage system according to an embodiment of the disclosure. As illustrated in FIG. 1, the energy storage system 100 in this embodiment includes a primary energy-storage-apparatus 10 and at least one auxiliary energy-storage-apparatus (including auxiliary energy-storage-apparatuses 21, 22, ..., 2N illustrated in FIG. 1). The primary energy-storage-apparatus 10 includes a main control module 11, a first energy-storage-group 12, at least one power-supply-interface (including power-supply-interfaces 131, 132, ..., 13M illustrated in FIG. 1), and at least one auxiliary machine-interface (including auxiliary machine-interfaces 141, 142, ..., 14N illustrated in FIG. 1), where M and N are both positive integers. M may or may not be equal to N.

The power-supply-interface is connectable to an electronic device. As illustrated in FIG. 1, a power-supply-interface 131 is connectable to an electronic device 31, a power-supply-interface 132 is connectable to an electronic device 32, and a power-supply-interface 13M is connectable to an electronic device 3M.

The main control module 11 is configured to control the first energy-storage-group 12 or the first auxiliary energy-storage-apparatus 21 to power the electronic device. The first auxiliary energy-storage-apparatus 21 is any one of the at least one auxiliary energy-storage-apparatus.

In the embodiments of the disclosure, the primary energy-storage-apparatus 10 is an energy storage product. The first energy-storage-group 12 of the primary energy-storage-apparatus 10 is configured to power at least one electronic device through at least one power-supply-interface. The primary energy-storage-apparatus 10 may control the at least one auxiliary energy-storage-apparatus to power at least one electronic device.

Specifically, the main control module 11 of the primary energy-storage-apparatus 10 is configured to control the first energy-storage-group 12 or the first auxiliary energy-storage-apparatus 21 to power the electronic device. The main control module 11 may include a memory. The memory may store a power supply policy. The main control module 11 may determine, according to the power supply policy, one of the first energy-storage-group 12 or the at least one auxiliary energy-storage-apparatus to power the electronic device. For example, the power supply policy may include giving priority to the auxiliary energy-storage-apparatus for powering the electronic device, giving priority to the primary energy-storage-apparatus for powering the electronic device, giving priority to an energy-storage-apparatus having a low power level for powering the electronic device, giving priority to an energy-storage-apparatus having a high power level for powering the electronic device, or the like.

In the embodiments of the disclosure, the primary energy-storage-apparatus is connectable to the at least one first auxiliary energy-storage-apparatus, so that a total battery capacity of the energy storage system can be flexibly adjusted on the basis of the first energy-storage-group. This enables the energy storage system to meet the endurance requirements in different scenarios without the need to develop energy storage products having different battery capacities, thereby reducing the development costs of energy storage products.

Optionally, each of the at least one secondary machine-interface is connectable to a corresponding one of the at least one auxiliary energy-storage-apparatus. As illustrated in FIG. 1, an auxiliary machine-interface 141 is connectable to an auxiliary energy-storage-apparatus 21, an auxiliary machine-interface 142 is connectable to an auxiliary energy-storage-apparatus 22, ..., and an auxiliary machine-interface 14N is connectable to an auxiliary energy-storage-apparatus 2N. The power-supply-interface is connectable to the electronic device. As illustrated in FIG. 1, the power-supply-interface 131 is connectable to the electronic device 31, the power-supply-interface 132 is connectable to the electronic device 32, and the power-supply-interface 13M is connectable to the electronic device 3M.

Optionally, the main control module 11 is configured to power the electronic device (for example, the electronic device 31) via the first energy-storage-group 12 or the first auxiliary energy-storage-apparatus 21 when a first auxiliary machine-interface (for example, the auxiliary machine-interface 141) is connected to the first auxiliary energy-storage-apparatus (for example, the auxiliary energy-storage-apparatus 21).

Optionally, the first auxiliary machine-interface 141 may be any one of the at least one auxiliary machine-interface, and the first auxiliary energy-storage-apparatus 21 may be any one of the at least one auxiliary energy-storage-apparatus.

FIG. 1 illustrates at least one auxiliary energy-storage-apparatus, where N is used to represent at least one auxiliary energy-storage-apparatus. When N = 1, the at least one auxiliary energy-storage-apparatus includes the auxiliary energy-storage-apparatus 21, and in this case, the first auxiliary energy-storage-apparatus is the auxiliary energy-storage-apparatus 21. When N = 2, the at least one auxiliary energy-storage-apparatus may include the auxiliary energy-storage-apparatus 21 and the auxiliary energy-storage-apparatus 22, and in this case, the first auxiliary energy-storage-apparatus is the auxiliary energy-storage-apparatus 21 or the auxiliary energy-storage-apparatus 22. When N = 3, the at least one auxiliary energy-storage-apparatus may include the auxiliary energy-storage-apparatus 21, the auxiliary energy-storage-apparatus 22, and an auxiliary energy-storage-apparatus 23, and in this case, the first auxiliary energy-storage-apparatus is any one of the auxiliary energy-storage-apparatus 21, the auxiliary energy-storage-apparatus 22, and the auxiliary energy-storage-apparatus 23, and so on.

FIG. 1 illustrates at least one auxiliary machine-interface, where N is used to represent at least one auxiliary machine-interface. When N = 1, the at least one auxiliary machine-interface may include the auxiliary machine-interface 141, and in this case, the first auxiliary machine-interface is the auxiliary machine-interface 141. When N = 2, the at least one auxiliary machine-interface may include the auxiliary machine-interface 141 and the auxiliary machine-interface 142, and in this case, the first auxiliary machine-interface is the auxiliary machine-interface 141 or the auxiliary machine-interface 142. When N = 3, the at least one auxiliary machine-interface may include the auxiliary machine-interface 141, the auxiliary machine-interface 142, and an auxiliary machine-interface 143, and in this case, the first auxiliary machine-interface is any one of the auxiliary machine-interface 141, the auxiliary machine-interface 142, and the auxiliary machine-interface 143, and so on.

FIG. 1 illustrates at least one power-supply-interface, where N is used to represent at least one power-supply-interface. When N = 1, the at least one power-supply-interface may include the power-supply-interface 131, and in this case, the first power-supply-interface is the power-supply-interface 131. When N = 2, the at least one power-supply-interface may include the power-supply-interface 131 and the power-supply-interface 132, and in this case, the first power-supply-interface is the power-supply-interface 131 or the power-supply-interface 132. When N = 3, the at least one power-supply-interface may include the power-supply-interface 131, the power-supply-interface 132, and a power-supply-interface 133, and in this case, the first power-supply-interface is any one of the power-supply-interface 131, the power-supply-interface 132, and the power-supply-interface 133, and so on.

In the embodiment of the disclosure, one power-supply-interface may be configured for powering of one electronic device. In a case where the primary energy-storage-apparatus 10 has multiple power-supply-interfaces, the primary energy-storage-apparatus 10 can simultaneously power the multiple electronic devices. The power-supply-interface may be a direct-current (DC) power-supply-interface or an alternating-current (AC) power-supply-interface. The DC power-supply-interface may connect a DC power supply to an electronic device requiring DC, and the AC power-supply-interface may connect an AC power supply to an electronic device requiring AC.

The electronic device may include terminal devices such as a mobile phone, a notebook computer, and a tablet computer. Alternatively, the electronic device may include electrical devices such as an electric oven, an electric oven, an electric refrigerator, an electric fan, and a lighting lamp.

The main control module 11 may include a main control circuit board. The main control module 11 can perform data sampling (for example, sampling a voltage of the first energy-storage-group), charge, and control all interfaces (including the power-supply-interface and the auxiliary machine-interface).

The first energy-storage-group 12 may include a lithium energy-storage-group. The lithium energy-storage-group may include at least two lithium batteries connected in parallel. Alternatively, the lithium energy-storage-group may include at least two lithium batteries connected in series. Alternatively, the lithium energy-storage-group may include a combination of at least two lithium batteries connected in parallel and at least two lithium batteries connected in series.

The auxiliary energy-storage-apparatus is also an energy storage product. Similar to the primary energy-storage-apparatus, the auxiliary energy-storage-apparatus may be configured to directly supply electric energy for an electronic device, or to indirectly supply electric energy for the electronic device (i.e., the auxiliary energy-storage-apparatus cannot independently power the electronic device, and is configured to power the electronic device via the primary energy-storage-apparatus). In a case where the auxiliary energy-storage-apparatus is configured to directly supply electric energy to the electronic device, the auxiliary energy-storage-apparatus has a structure similar to that of the primary energy-storage-apparatus, and also includes a main control module, an energy-storage-group, and a power-supply-interface. In a case where the auxiliary energy-storage-apparatus is configured to indirectly supply electric energy to the electronic device, the auxiliary energy-storage-apparatus may include an energy-storage-group, where the energy-storage-group may be connectable to one of the auxiliary machine-interfaces of the primary energy-storage-apparatus through a data line, and the primary energy-storage-apparatus may control a battery of the auxiliary energy-storage-apparatus to power the electronic device through the power-supply-interface of the primary energy-storage-apparatus. The auxiliary energy-storage-apparatus may further include a battery protection plate. In addition, the auxiliary energy-storage-apparatus may further include a display module for displaying a remaining energy of the auxiliary energy-storage-apparatus.

The primary energy-storage-apparatus may include a positive pole and a negative pole, and the auxiliary energy-storage-apparatus may also include a positive pole and a negative pole. In a case where the primary energy-storage-apparatus is connected to the auxiliary energy-storage-apparatus through the auxiliary machine-interface, the primary energy-storage-apparatus has at least one auxiliary machine-interface, so that the positive pole of the primary energy-storage-apparatus is connected to the positive pole of the auxiliary energy-storage-apparatus, and the negative pole of the primary energy-storage-apparatus is connected to the negative pole of the auxiliary energy-storage-apparatus.

The primary energy-storage-apparatus may be in wire communication with the auxiliary energy-storage-apparatus. For example, the primary energy-storage-apparatus may communicate with the auxiliary energy-storage-apparatus through an auxiliary machine-interface using a single wire or multiple wires, and acquire information of the auxiliary energy-storage-apparatus (for example, capacity information of an energy-storage-group of the auxiliary energy-storage-apparatus, remaining energy information of the energy-storage-group, and the like).

The energy storage system in the embodiments of the disclosure can improve an endurance capability of a product without the need for developing a new product, and improve the utilization of an energy storage product. The energy storage system in the embodiments of the disclosure can be applied to various scenarios. In a case where a long endurance is not required, carrying only the primary energy-storage-apparatus is sufficient, thereby enhancing portability. In a case where a long endurance is required, both the primary energy-storage-apparatus and the at least one auxiliary energy-storage-apparatus can be carried. This improves the utilization of the primary energy-storage-apparatus, and a performance-price ratio.

In the embodiments of the disclosure, the primary energy-storage-apparatus can be connected to the at least one auxiliary energy-storage-apparatus, so that a total battery capacity of the energy storage system can be flexibly adjusted on the basis of a first energy-storage-group. This enables the energy storage system to meet the endurance requirements in different scenarios without the need to develop energy storage products having different battery capacities, thereby reducing the development costs of energy storage products.

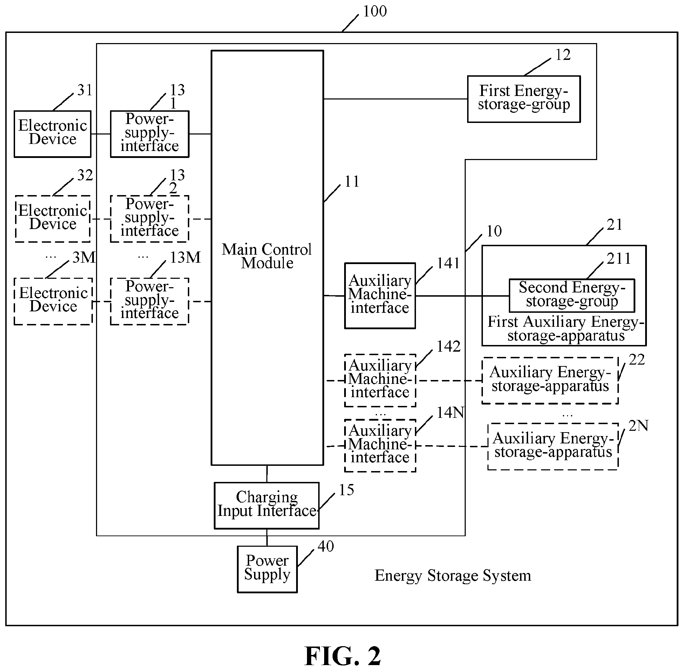

FIG. 2 is a schematic structural diagram of another energy storage system according to an embodiment of the disclosure. The energy storage system in FIG. 2 is the same as the energy storage system in FIG. 1 except the following. As illustrated in FIG. 2, the primary energy-storage-apparatus 10 further includes a charging input interface 15, the first auxiliary energy-storage-apparatus 21 includes a second energy-storage-group 211, and the charging input interface 15 is connectable to a power supply 40. The main control module 11 is further configured to charge the first energy-storage-group 12 or the second energy-storage-group 211 via the power supply 40 when the charging input interface 15 is connected to the power supply 40.

In the embodiment of the disclosure, when the auxiliary energy-storage-apparatus 22 is connected to the main control module 11 via the auxiliary machine-interface 142 and the charging input interface 15 is connected to the power supply 40, the main control module 11 may charge the energy-storage-group of the auxiliary energy-storage-apparatus 22 via the power supply 40.

In the embodiments of the disclosure, the power supply 40 can charge only one energy-storage-group at a time, and the main control module 11 may determine which energy-storage-group to charge according to a particular strategy.

Optionally, the main control module 11 configured to charge the first energy-storage-group 12 or the second energy-storage-group 211 via the power supply 40 is configured to: charge the first energy-storage-group 12 when a remaining energy of the first energy-storage-group 12 is less than a predetermined value; and charge the second energy-storage-group 211 when the remaining energy of the first energy-storage-group 12 is greater than or equal to the predetermined value and a remaining energy of the second energy-storage-group 211 is less than the predetermined value.

Optionally, the main control module 11 configured to charge the first energy-storage-group 12 or the second energy-storage-group 211 via the power supply 40 is configured to: charge the second energy-storage-group 211 when the remaining energy of the first energy-storage-group 12 is greater than or equal to a predetermined value and the remaining energy of the second energy-storage-group 211 is greater than or equal to the predetermined value.

In the embodiments of the disclosure, the predetermined value can be set to be greater than or equal to 80% of the rated capacity. For example, the predetermined value can be set to be 95% of the rated capacity. Generally, when the energy of the energy-storage-group is greater than the predetermined value, the energy-storage-group is considered fully charged or substantially fully charged. Not fully charged means that an energy is not charged to reach 100% of the rated capacity, and fully charged means that an energy is charged to reach 100% of the rated capacity.

In the embodiments of the disclosure, the auxiliary energy-storage-apparatus may not directly power the electronic device, but indirectly power the electronic device. The auxiliary energy-storage-apparatus is configured to power the electronic device through the primary energy-storage-apparatus. In other words, the auxiliary energy-storage-apparatus cannot independently power the electronic device.

In the embodiments of the disclosure, a principle of prioritizing charging of the first energy-storage-group 12 is adopted. Charging of the first energy-storage-group 12 of the primary energy-storage-apparatus 10 takes priority over that of the second energy-storage-group of the first auxiliary energy-storage-apparatus 12. When the first energy-storage-group 12 is first fully charged, the second energy-storage-group 211 of the first auxiliary energy-storage-apparatus 21 is then charged. Priority is given to charging of an energy-storage-group of the primary energy-storage-apparatus 10, so that in a case where a long endurance is not required and there is no extra time available to charge an energy-storage-group of the auxiliary energy-storage-apparatus, carrying only the primary energy-storage-apparatus is sufficient to satisfy the endurance requirement, thereby enhancing portability. Otherwise, if priority is given to charging of the energy-storage-group of the auxiliary energy-storage-apparatus, it would result in inconvenience when a long endurance is not required and there is no extra time available to charge the energy-storage-group of the primary energy-storage-apparatus 10 (i.e., the first energy-storage-group 12). This inconvenience arises because the auxiliary energy-storage-apparatus cannot independently power the electronic device, thus both the primary energy-storage-apparatus 10 and the auxiliary energy-storage-apparatus are required to be carried.

When the primary energy-storage-apparatus 10 is in a charging state and a new auxiliary energy-storage-apparatus is connected, it continues to charge the primary energy-storage-apparatus 10 on condition that the primary energy-storage-apparatus 10 is not fully charged; otherwise, it may then proceed to charge the new auxiliary energy-storage-apparatus on condition that the primary energy-storage-apparatus 10 is fully charged. In a case where charging of multiple auxiliary energy-storage-apparatuses are required, priority can be given to charging of the auxiliary energy-storage-apparatus having the highest remaining power, allowing one of the auxiliary energy-storage-apparatuses to be fully charged first. In a case where available time is limited and it is not possible to fully charge all the auxiliary energy-storage-apparatuses within the available time, priority is given to full charging of one of the auxiliary energy-storage-apparatuses that can be fully charged the fastest, allowing carrying only the auxiliary energy-storage-apparatus having the highest remaining energy when the energy storage system needs to be used, thereby enhancing portability.

Whether the primary energy-storage-apparatus 10 is charged first or the auxiliary energy-storage-apparatus is charged first, when full charging of a currently changed energy-storage-group is detected, stop charging of the currently changed energy-storage-group and start charging of another energy-storage-group. This process is repeated until energy-storage-groups of all the auxiliary energy-storage-apparatuses connected to the primary energy-storage-apparatus 10 are all fully charged. When the energy-storage-groups of all the auxiliary energy-storage-apparatuses connected to the primary energy-storage-apparatus 10 are all fully charged, the primary energy-storage-apparatus 10 stops a charging state.

When the primary energy-storage-apparatus 10 is connected to the first auxiliary energy-storage-apparatus 21 via the auxiliary machine-interface and the primary energy-storage-apparatus 10 is in inactivate, the first auxiliary energy-storage-apparatus 21 may send an activation signal to the primary energy-storage-apparatus 10 to activate the primary energy-storage-apparatus 10, so that the primary energy-storage-apparatus 10 can identify a connection between the auxiliary energy-storage-apparatus and the primary energy-storage-apparatus 10. Alternatively, the primary energy-storage-apparatus 10 can periodically scan for a connection signal to determine whether there is a connection between the auxiliary energy-storage-apparatus and the primary energy-storage-apparatus 10.

In a discharging state, whether the auxiliary energy-storage-apparatus is connected to the primary energy-storage-apparatus 10 during or before discharging, an intelligent switch between discharging of the energy-storage-group of the primary energy-storage-apparatus 10 and discharging of the energy-storage-group of the auxiliary energy-storage-apparatus can be carried out. The intelligent switch can be performed according to a particular strategy. The particular strategy may include, discharging of the primary energy-storage-apparatus 10 is prioritized, discharging of the auxiliary energy-storage-apparatus is prioritized, discharging of an energy-storage-apparatus having the lowest remaining energy is prioritized, and discharging of an energy-storage-apparatus having the highest remaining energy is prioritized. According to the particular strategy, one of the energy-storage-groups is discharged first until a remaining energy of the one of the energy-storage-groups is less than a particular threshold value (for example, 5% of the rated capacity). When the remaining energy of the one of the energy-storage-groups is less than a particular threshold value, stop discharging of the one of the energy-storage-groups and start discharging of another energy-storage-group. This process is repeated until the remaining energy of all energy-storage-groups is less than the particular threshold value. When the remaining energy of all energy-storage-groups is less than the particular threshold value, the primary energy-storage-apparatus 10 stops the discharging state.

For lithium energy-storage-groups connected in parallel, whether a remaining energy of an energy-storage-group is less than a particular threshold value (for example, 5%) of the rated capacity can be determined by determining that whether a voltage of a lithium energy-storage-group is less than a particular threshold value. For example, when the voltage of the lithium energy-storage-group is lower than 3.4 V, it may be determined that the remaining energy of the lithium energy-storage-group is less than the particular threshold value.

Alternatively, the main control module 11 configured to control the first energy-storage-group 12 or the first auxiliary energy-storage-apparatus 21 to power the electronic device 31 is configured to: control an energy-storage-group of the first auxiliary energy-storage-apparatus 21 to power the electronic device 31 when a remaining energy of the first auxiliary energy-storage-apparatus 21 is greater than a first threshold value; and control the first energy-storage-group 12 to power the electronic device 31 when a remaining energy of any energy-storage-group of the at least one auxiliary energy-storage-apparatus is less than a first threshold value and the remaining energy of the first energy-storage-group 12 is greater than a second threshold value.

In a case where the at least one auxiliary energy-storage-apparatus includes only the first auxiliary energy-storage-apparatus, the main control module is configured to control the first energy-storage-group to power the electronic device when the remaining energy of the first auxiliary energy-storage-apparatus is less than the first threshold value and the remaining energy of the first energy-storage-group is greater than the second threshold value.

In a case where the at least one auxiliary energy-storage-apparatus includes the first auxiliary energy-storage-apparatus and a second auxiliary energy-storage-apparatus, the main control module is configured to control the first energy-storage-group to power the electronic device when the remaining energy of the first auxiliary energy-storage-apparatus and a remaining energy of the second auxiliary energy-storage-apparatus are both less than the first threshold value and the remaining energy of the first energy-storage-group is greater than the second threshold value.

In the embodiments of the disclosure, the first threshold value and the second threshold value may be set in advance and stored in the memory (for example, a non-volatile memory) of the main control module 11. The first threshold value may be set to be a percentage of the rated capacity of the energy-storage-group, for example, 30% or less. The second threshold value may be set to be a percentage of the rated capacity of the energy-storage-group, for example, 30% or more. The first threshold value may be the same as or different from the second threshold value. For example, the first threshold value may be set to be 10%, and the second threshold value may be set to be 30%.

The main control module 11 may monitor the remaining energy of the first energy-storage-group 12 in real time, and may also monitor a remaining energy of the energy-storage-group of the first auxiliary energy-storage-apparatus 21 via the first auxiliary machine-interface.

In the embodiments of the disclosure, a principle that prioritizing charging of the auxiliary energy-storage-apparatus is adopted. Priority is given to the second energy-storage-group 211 of the first auxiliary energy-storage-apparatus 21 to power the electronic device 31. The main control module 11 is configured to control the first energy-storage-group 12 to power the electronic device 31 when the remaining energy of the second energy-storage-group 211 is less than the first threshold value and the remaining energy of the first energy-storage-group 12 of the primary energy-storage-apparatus 10 is greater than the second threshold value. During discharging, priority is given to discharging of the energy-storage-group of the auxiliary energy-storage-apparatus, and discharging of the energy-storage-group of the primary energy-storage-apparatus is not started until the remaining energy of the energy-storage-group of each of the at least one auxiliary energy-storage-apparatus is less than the first threshold value, thereby ensuring a sufficient remaining energy of the first energy-storage-group 12 of the primary energy-storage-apparatus. Priority is given to discharging of the auxiliary energy-storage-apparatus, so that in a case where a long endurance is not required and there is no extra time available to charge the auxiliary energy-storage-apparatus, a sufficient remaining energy of the primary energy-storage-apparatus can be ensured. This allows the fulfillment of the endurance requirement even when carrying only the primary energy-storage-apparatus, thereby enhancing portability. Otherwise, if priority is given to discharging of the energy-storage-group of the primary energy-storage-apparatus 10 (i.e., the first energy-storage-group 12), it would result in inconvenience when a long endurance is not required and there is no extra time available to charge the primary energy-storage-apparatus10 (i.e., the first energy-storage-group12). This inconvenience arises because the auxiliary energy-storage-apparatus cannot independently power the electronic device, thus both the primary energy-storage-apparatus 10 and the auxiliary energy-storage-apparatus are required to be carried.

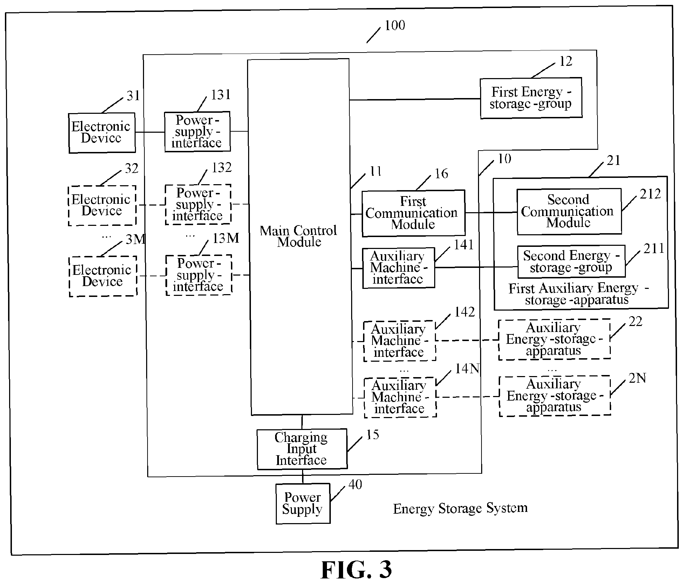

FIG. 3 is a schematic structural diagram of another energy storage system according to an embodiment of the disclosure. The energy storage system in FIG. 3 is the same as the energy storage system in FIG. 2, except that the primary energy-storage-apparatus 10 further includes a first communication module 16, and the first auxiliary energy-storage-apparatus 21 further includes a second communication module 212. The main control module 11 is configured to communicate with the second communication module 212 through the first communication module 16 when the first auxiliary machine-interface 141 is connected to the first auxiliary energy-storage-apparatus 21.

Each of the first communication module 16 and the second communication module 212 may be a wireless communication module (such as a Bluetooth module, and a Wi-Fi module), or may also be wired communication modules. When the primary energy-storage-apparatus 10 is in a communication connection with the second communication module 212 of the first auxiliary energy-storage-apparatus 21 via the first communication module 16, the first auxiliary energy-storage-apparatus 21 may transmit battery state information of the first auxiliary energy-storage-apparatus 21 to the primary energy-storage-apparatus 10 through the second communication module 212, where the battery state information may include whether the battery is fully charged, whether the battery is over-discharged, remaining energy information of the battery, voltage information of the battery, discharge current information, charging current information, and the like.

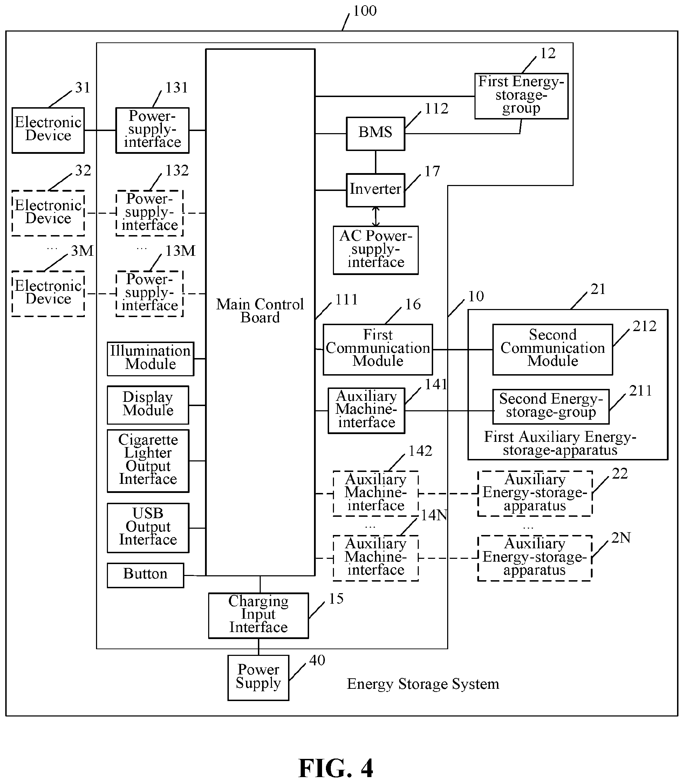

FIG. 4 is a schematic structural diagram of another energy storage system according to an embodiment of the disclosure. The main control module 11 in FIG. 4 is the same as the main control module in FIG. 3 except the follows. The main control module 11 in FIG. 4 includes a main control board 111 and a battery management system (BMS) 112, where the main control board 111 is connected to the first energy-storage-group 12 through the BMS 112.

The BMS, which may also be referred to as a battery protector or a battery manager, may manage and maintain the first energy-storage-group 12 and the energy-storage-group of the auxiliary energy-storage-apparatus connected to the primary energy-storage-apparatus 10, preventing energy-storage-group from being overcharged and over-discharged, prolonging the service life of the energy-storage-group, and monitoring a state of the energy-storage-group (for example, whether the energy-storage-group is fully charged, whether the energy-storage-group is over-discharged, remaining energy information of the energy-storage-group, voltage information of the energy-storage-group, discharge current information of the energy-storage-group, and charging current information of the energy-storage-group).s

The at least one power-supply-interface includes at least one of: at least one DC power-supply-interface or at least one AC power-supply-interface.

In the embodiments of the disclosure, the DC power-supply-interface may provide a DC voltage, and the AC power-supply-interface may provide an AC voltage. Since electronic devices on the market may use DC or AC power, in the embodiments of the disclosure, both a DC powered electronic device (such as a mobile phone and a cigarette lighter) and an AC powered electronic device can be powered. For example, in the embodiments of the disclosure, at least one DC power-supply-interface and at least one AC power-supply-interface can be provided.

Alternatively, referring to FIG. 4, the primary energy-storage-apparatus 10 further includes an inverter 17, and the main control board 111 is connected to the at least one AC power-supply-interface via the inverter 17.

In the embodiments of the disclosure, the inverter 17 can convert a DC into an AC, so that an AC powered electronic device can be powered via the AC power-supply-interface.

The main control board 111 is connected to the at least one DC power-supply-interface.

In the embodiments of the disclosure, since the energy-storage-group itself provides DC power, the main control board can directly output a voltage of the energy-storage-group to DC powered electronic devices through the DC power-supply-interface.

As illustrated in FIG. 4, the primary energy-storage-apparatus 10 may further include an illumination module, a display module, a cigarette lighter output interface, a universal serial bus (USB) output interface, a button, and the like. The illumination module may provide a lighting function, and may include an incandescent lamp. The display module may display state information of various energy-storage-groups. The display module may include a display screen. The cigarette lighter output interface may power a cigarette lighter. The USB output interface may supply power to various electronic devices through a USB data cable. The user can turn on or off the primary energy-storage-apparatus 10 by pressing a button.

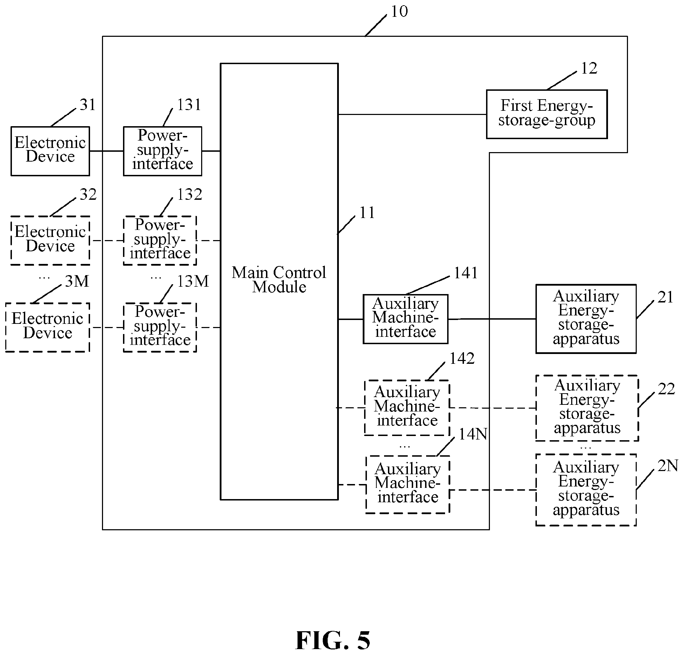

FIG. 5 is a schematic structural diagram of a primary energy-storage-apparatus according to an embodiment of the disclosure. As illustrated in FIG. 5, the primary energy-storage-apparatus 10 includes a main control module 11, a first energy-storage-group 12, at least one power-supply-interface (including power-supply-interfaces 131, 132, ..., 13M in FIG. 5), and at least one auxiliary machine-interface (including auxiliary machine-interfaces 141, 142, ..., 14N in FIG. 1), where M and N are both positive integers. M may or may not be equal to N.

The at least one auxiliary machine-interface is connectable to at least one auxiliary energy-storage-apparatus. As illustrated in FIG. 5, the auxiliary machine-interface 141 is connectable to the auxiliary energy-storage-apparatus 21, the auxiliary machine-interface 142 is connectable to the auxiliary energy-storage-apparatus 22, ..., and the auxiliary machine-interface 14N is connectable to the auxiliary energy-storage-apparatus 2N. The power-supply-interface is connectable to an electronic device. As illustrated in FIG. 5, the power-supply-interface 131 is connectable to the electronic device 31, the power-supply-interface 132 is connectable to the electronic device 32, and the power-supply-interface 13M is connectable to the electronic device 3M. The main control module 11 is configured to control the first energy-storage-group 12 or the first auxiliary energy-storage-apparatus 21 to power the electronic device (for example, the electronic device 31) when a first auxiliary machine-interface (for example, the auxiliary machine-interface 141) is connected to the first auxiliary energy-storage-apparatus (for example, the auxiliary energy-storage-apparatus 21), where the first auxiliary machine-interface 141 is any one of the at least one auxiliary machine-interface, and the first auxiliary energy-storage-apparatus 21 is any one of the at least one auxiliary energy-storage-apparatus.

For functions and structures of all components of the primary energy-storage-apparatus 10, reference may be made to the energy storage systems in FIG. 1 to FIG. 4, which are not described herein again.

In the embodiments of the disclosure, the primary energy-storage-apparatus is connectable to the at least one auxiliary energy-storage-apparatus, so that a total battery capacity of the energy storage system can be flexibly adjusted on the basis of the first energy-storage-group. This enables the energy storage system to meet the endurance requirements in different scenarios without the need to develop energy storage products having different battery capacities, thereby reducing the development costs of energy storage products.

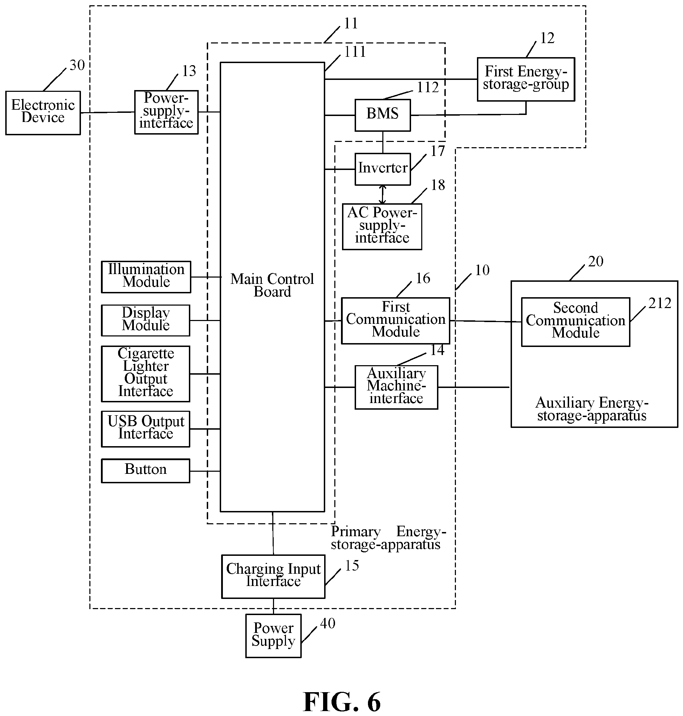

FIG. 6 is a schematic structural diagram illustrating another primary energy-storage-apparatus according to an embodiment of the disclosure. As illustrated in FIG. 6, the primary energy-storage-apparatus 10 includes a main control module 11, a first energy-storage-group 12, a power-supply-interface 13, and an auxiliary machine-interface 14. The power-supply-interface 13 may be implemented as one or more power-supply-interfaces. The auxiliary machine-interface 14 may be implemented as one or more auxiliary machine-interfaces.

The auxiliary machine-interface 14 is connectable to an auxiliary energy-storage-apparatus 20, and the power-supply-interface 13 is connectable to an electronic device 30. The main control module 11 is configured to control the first energy-storage-group 12 or the auxiliary energy-storage-apparatus 20 to power the electronic device 30 when the auxiliary machine-interface 14 is connected to the auxiliary energy-storage-apparatus 20.

Optionally, the first energy-storage-group 12 includes at least one of a first battery group or a first capacitor group.

Optionally, the primary energy-storage-apparatus 10 further includes the charging input interface 15 connectable to the power supply 40. The main control module 11 is further configured to charge the first energy-storage-group 12 or the auxiliary energy-storage-apparatus 20 via the power supply 40 when the charging input interface 15 is connected to the power supply 40.

Optionally, the main control module 11 configured to charge the first energy-storage-group 12 or the auxiliary energy-storage-apparatus 20 via the power supply 40 is configured to: charge the first energy-storage-group 12 when the remaining energy of the first energy-storage-group 12 is less than the predetermined value; and charge the auxiliary energy-storage-apparatus 20 when the remaining energy of the first energy-storage-group 12 is greater than or equal to a predetermined value and the remaining energy of the auxiliary energy-storage-apparatus 20 is less than the predetermined value.

Optionally, the main control module 11 configured to control the first energy-storage-group 12 or the auxiliary energy-storage-apparatus 20 to power the electronic device 30 is configured to: control an energy-storage-group of the auxiliary energy-storage-apparatus 20 to power the electronic device 30 when a remaining energy of the auxiliary energy-storage-apparatus 20 is greater than a first threshold value; and control the first energy-storage-group 12 to power the electronic device 30 when the remaining energy of the auxiliary energy-storage-apparatus 20 is less than the first threshold value and a remaining energy of the first energy-storage-group 12 is greater than a second threshold value.

Optionally, the main control module 11 configured to control the first energy-storage-group 12 or the auxiliary energy-storage-apparatus 20 to power the electronic device 30 is configured to:
control the first energy-storage-group 12 to power the electronic device 30 when the auxiliary machine-interface is connected to multiple auxiliary energy-storage-apparatuses 20, and a remaining energy of each of the multiple auxiliary energy-storage-apparatuses 20 is less than a first threshold value and a remaining energy of the first energy-storage-group 12 is greater than a second threshold value.

Optionally, the primary energy-storage-apparatus 10 further includes the first communication module 16, and the auxiliary energy-storage-apparatus 20 further includes the second communication module 212. The main control module 11 is configured to communicate with the second communication module 212 through the first communication module 16 when the auxiliary machine-interface 14 is connected to the auxiliary energy-storage-apparatus 20.

Optionally, the main control module 11 includes a main control board 111 and a battery management system 112, where the main control board 111 is connected to the first energy-storage-group 12 by using the battery management system 112.

Optionally, the power-supply-interface 13 includes a DC power-supply-interface and/or an AC power-supply-interface.

Optionally, the primary energy-storage-apparatus 10 further includes an inverter 17 and an AC power-supply-interface 18, where the main control board 111 of the main control module 11 is connected to the AC power-supply-interface 18 by using the inverter 17.

Optionally, the main control board 111 of the main control module 11 is connected to the DC power-supply-interface.

Optionally, the primary energy-storage-apparatus 10 is a portable energy-storage-apparatus.

The primary energy-storage-apparatus 10 can further include an illumination module, a display module, a cigarette lighter output interface, a USB output interface, a button, and the like. The illumination module can provide a lighting function, and can include an incandescent lamp. The display module can display state information about various energy-storage-groups, and the display module can include a display screen. The cigarette lighter output interface may supply power to the cigarette lighter, and the USB output interface may supply power to various electronic devices through a USB data cable. The primary energy-storage-apparatus 10 can be turned on or off by pressing a button.

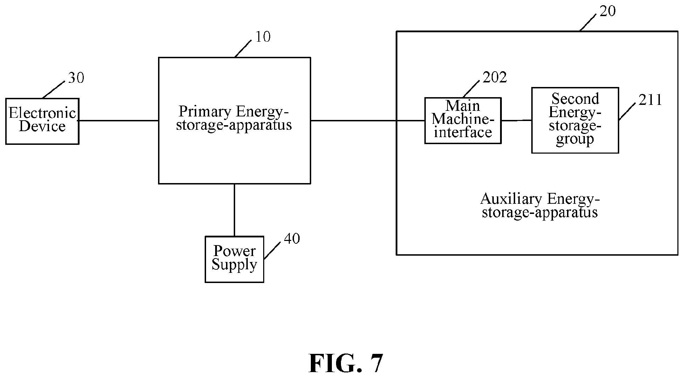

FIG. 7 is a schematic structural diagram of an auxiliary energy-storage-apparatus according to an embodiment of the disclosure. As illustrated in FIG. 7, the auxiliary energy-storage-apparatus 20 includes a second energy-storage-group 211 and a main machine-interface 202. The second energy-storage-group 211 is connected to the main machine-interface 202. The main machine-interface 202 is connectable to the primary energy-storage-apparatus 10 to power the electronic device 30 via the primary energy-storage-apparatus 10. The main machine-interface 202 is similar to the auxiliary machine-interface. The main machine-interface 202 may be connected to the auxiliary machine-interface of the primary energy-storage-apparatus 10, and may transmit information of the auxiliary energy-storage-apparatus 20 (for example, capacity information of the second energy-storage-group 211 of the auxiliary energy-storage-apparatus 20, remaining energy information of the second energy-storage-group 211, and the like) to the primary energy-storage-apparatus 10 via the main machine-interface 202.

Optionally, the main machine-interface 202 is further configured to obtain electric energy from the power supply 40 connected to the primary energy-storage-apparatus 10 to charge the second energy-storage-group 211.

For the primary energy-storage-apparatus 10, reference may be made to the primary energy-storage-apparatus 10 in FIG. 5 or FIG. 6.

Optionally, the second energy-storage-group 211 includes at least one of a second battery group or a second capacitor group.

Optionally, the auxiliary energy-storage-apparatus 20 is a portable energy-storage-apparatus.

The energy storage system, the primary energy-storage-apparatus, and the auxiliary energy-storage-apparatus provided in the embodiments of the disclosure are described in detail above, specific examples are used herein to describe the principle and implementation manners of the disclosure. The illustration of the above embodiments is merely used to help understand the method and the core idea of the disclosure. Meanwhile, those skilled in the art may make modifications to the specific implementation manners and the application scope according to the idea of the disclosure. In summary, the contents of the specification should not be construed as limiting the disclosure.

## Claims

1. An energy storage system, comprising a primary energy-storage-apparatus and a first auxiliary energy-storage-apparatus, wherein the primary energy-storage-apparatus comprises a main control module, a first energy-storage-group, at least one power-supply-interface, and a first auxiliary machine-interface, and the at least one power-supply-interface is connectable to an electronic device;
wherein the main control module is configured to control the first energy-storage-group or the first auxiliary energy-storage-apparatus to power the electronic device, and the first auxiliary machine-interface is connectable to the first auxiliary energy-storage-apparatus.

2. The energy storage system of claim 1, wherein the first energy-storage-group comprises at least one of a first battery group or a first capacitor group.

3. The energy storage system of claim 1, wherein the main control module is configured to control the first energy-storage-group or the first auxiliary energy-storage-apparatus to power the electronic device when the first auxiliary machine-interface is connected to the first auxiliary energy-storage-apparatus.

4. The energy storage system of claim 1, wherein
the primary energy-storage-apparatus further comprises a charging input interface connectable to a power supply, and the first auxiliary energy-storage-apparatus comprises a second energy-storage-group; and
the main control module is further configured to charge the first energy-storage-group or the second energy-storage-group via the power supply when the charging input interface is connected to the power supply.

5. The energy storage system of claim 4, wherein the main control module configured to charge the first energy-storage-group or the second energy-storage-group via the power supply is configured to:
charge the first energy-storage-group when a remaining energy of the first energy-storage-group is less than a predetermined value; and
charge the second energy-storage-group when the remaining energy of the first energy-storage-group is greater than or equal to the predetermined value and a remaining energy of the second energy-storage-group is less than the predetermined value.

6. The energy storage system of claim 1, wherein the main control module configured to control the first energy-storage-group or the first auxiliary energy-storage-apparatus to power the electronic device is configured to:
control an energy-storage-group of the first auxiliary energy-storage-apparatus to power the electronic device when a remaining energy of the first auxiliary energy-storage-apparatus is greater than a first threshold value; and
control the first energy-storage-group to power the electronic device when the remaining energy of the first auxiliary energy-storage-apparatus is less than the first threshold value and a remaining energy of the first energy-storage-group is greater than a second threshold value.

7. The energy storage system of claim 1, further comprising a second auxiliary energy-storage-apparatus, wherein the main control module is configured to control the first energy-storage-group to power the electronic device when a remaining energy of the first auxiliary energy-storage-apparatus and a remaining energy of the second auxiliary energy-storage-apparatus are both less than a first threshold value and a remaining energy of the first energy-storage-group is greater than a second threshold value.

8. The energy storage system of claim 1, wherein
the primary energy-storage-apparatus further comprises a first communication module, and the first auxiliary energy-storage-apparatus further comprises a second communication module; and
the main control module is configured to communicate with the second communication module through the first communication module when the first auxiliary machine-interface is connected to the first auxiliary energy-storage -apparatus.

9. The energy storage system of claim 1, wherein the main control module comprises a main control board and a battery management system, wherein the main control board is connected to the first energy-storage-group through the battery management system.

10. The energy storage system of claim 1, wherein the at least one power-supply-interface comprises at least one of: at least one direct-current (DC) power-supply-interface or at least one alternating-current (AC) power-supply-interface.

11. The energy storage system of claim 1, wherein the primary energy-storage-apparatus further comprises an inverter and an AC power-supply-interface, and a main control board of the main control module is connected to the AC power-supply-interface through the inverter.

12. The energy storage system of claim 10, wherein a main control board of the main control module is connected to the at least one DC power-supply-interface.

13. A primary energy-storage-apparatus, comprising a main control module, a first energy-storage-group, at least one power-supply-interface, and at least one auxiliary machine-interface, wherein
the at least one auxiliary machine-interface is connectable to at least one auxiliary energy-storage-apparatus, and each of the at least one power-supply-interface is connectable to an electronic device; and
the main control module is configured to control the first energy-storage-group or the first auxiliary energy-storage-apparatus to power the electronic device when a first auxiliary machine-interface is connected to the first auxiliary energy-storage-apparatus, wherein the first auxiliary machine-interface is any one of the at least one auxiliary machine-interface, and the first auxiliary energy-storage-apparatus is any one of the at least one auxiliary energy-storage-apparatus.

14. A primary energy-storage-apparatus, comprising a main control module, a first energy-storage-group, a power-supply-interface, and an auxiliary machine-interface, wherein
the auxiliary machine-interface is connectable to an auxiliary energy-storage-apparatus, and the power-supply-interface is connectable to an electronic device; and
the main control module is configured to control the first energy-storage-group or the auxiliary energy-storage-apparatus to power the electronic device when the auxiliary machine-interface is connected to the auxiliary energy-storage-apparatus.

15. The primary energy-storage-apparatus of claim 14, wherein the first energy-storage-group comprises at least one of a first battery group or a first capacitor group.

16. The energy storage system of claim 14, further comprising a charging input interface connectable to a power supply, wherein
the main control module is further configured to charge the first energy-storage-group or the auxiliary energy-storage-apparatus via the power supply when the charging input interface is connected to the power supply.

17. The primary energy-storage-apparatus of claim 14, wherein the main control module configured to charge the first energy-storage-group or the auxiliary energy-storage-apparatus via the power supply is configured to:
charge the first energy-storage-group when a remaining energy of the first energy-storage-group is less than a predetermined value; and
charge the auxiliary energy-storage-apparatus when the remaining energy of the first energy-storage-group is greater than or equal to the predetermined value and a remaining energy of the auxiliary energy-storage-apparatus is less than the predetermined value.

18. The primary energy-storage-apparatus of claim 14, wherein the main control module configured to control the first energy-storage-group or the auxiliary energy-storage-apparatus to power the electronic device is configured to:
control an energy-storage-group of the auxiliary energy-storage-apparatus to power the electronic device when a remaining energy of the auxiliary energy-storage-apparatus is greater than a first threshold value; and
control the first energy-storage-group to power the electronic device when the remaining energy of the auxiliary energy-storage-apparatus is less than the first threshold value and a remaining energy of the first energy-storage-group is greater than a second threshold value.

19. The primary energy-storage-apparatus of claim 14, wherein the main control module configured to control the first energy-storage-group or the auxiliary energy-storage-apparatus to power the electronic device is configured to:
control the first energy-storage-group to power the electronic device when the auxiliary machine-interface is connected to a plurality of auxiliary energy-storage-apparatuses, and a remaining energy of each of the plurality of auxiliary energy-storage-apparatuses is less than a first threshold value and a remaining energy of the first energy-storage-group is greater than a second threshold value.

20. The primary energy-storage-apparatus of claim 14, further comprising a first communication module, and the auxiliary energy-storage-apparatus further comprises a second communication module;
the main control module is configured to communicate with the second communication module through the first communication module when the auxiliary machine-interface is connected to the auxiliary energy-storage-apparatus.

21. The primary energy-storage-apparatus of claim 14, wherein the main control module comprises a main control board and a battery management system, wherein the main control board is connected to the first energy-storage-group through the battery management system.

22. The primary energy-storage-apparatus of claim 14, wherein the power-supply-interface comprises at least one of a DC power-supply-interface or an AC power-supply-interface.

23. The primary energy-storage-apparatus of claim 14, wherein the primary energy-storage-apparatus further comprises an inverter and an AC power-supply-interface, wherein a main control board of the main control module is connected to the AC power-supply-interface through the inverter.

24. The primary energy-storage-apparatus of claim 14, wherein a main control board of the main control module is connected to the DC power-supply-interface.

25. The primary energy-storage-apparatus of any one of claims 14 to 24, wherein the primary energy-storage-apparatus is a portable energy-storage-apparatus.

26. An auxiliary energy-storage-apparatus, comprising a second energy-storage-group and a main machine-interface, wherein the second energy-storage-group is connected to the main machine-interface, and the main machine-interface is connectable to a primary energy-storage-apparatus to power an electronic device via the primary energy-storage-apparatus.

27. The auxiliary energy-storage-apparatus of claim 26, wherein the main machine-interface is further configured to receive electric energy from a power supply connected to the primary energy-storage-apparatus to charge the second energy-storage-group.

28. The auxiliary energy-storage-apparatus of claim 26 or 27, wherein the primary energy-storage-apparatus is the primary energy-storage-apparatus of any one of claims 14 to 25.

29. The auxiliary energy-storage-apparatus of claim 26 or 27, wherein the second energy-storage-group comprises at least one of a second battery group or a second capacitor group.

30. The auxiliary energy-storage-apparatus of claim 26 or 27, wherein the auxiliary energy-storage-apparatus is a portable energy-storage-apparatus.
